# EUROPEAN PATENT SPECIFICATION

(11) **EP 3 254 803 B1**
(45) Date of publication and mention of the grant of the patent: **08.05.2019**
(21) Application number: 17174638.1
(22) Date of filing: 06.06.2017
(51) Int. Cl.: B23Q 7/04, B27M 1/00, B23Q 39/02

(54) **MACHINE FOR PROCESSING SECTION BARS**
MASCHINE ZUR VERARBEITUNG VON PROFILSTÄBEN
MACHINE DE TRAITEMENT DE BARRES DE SECTION

(30) Priority: 06.06.2016 IT UA20164117
(43) Date of publication of application: 13.12.2017
(73) Proprietor: F.O.M. Industrie S.r.l., 47841 Cattolica (IT)
(72) Inventor: LATTANZI, Lorenzo, 61121 PESARO (IT)
(74) Representative: Manconi, Stefano

(56) References cited:
- EP-A1- 2 392 439
- EP-A1- 2 540 429

## Description

The present invention relates to a machine for processing section bars.

In the section bar processing field, in particular for section bars made of aluminium, light alloys, PVC or the like, it is known to provide a machine of the type comprising an elongated base; at least one processing station mounted along the base; and a feeding unit designed to hold the section bar at one rear end thereof and feed it along the base and through the processing station. Such a machine is known for example from Patent Document EP 2 392 439 A1.

Generally, the processing station is provided with a cutting device for cutting the section bar into two pieces, and an operating head for performing milling and/or drilling operations in said pieces.

During the processing by the cutting device and the operating head, the section bar and the pieces are normally held by at least two clamping vices mounted in the area of the processing station and movable along the base.

The clamping vices used to hold the section bars during the processing by the cutting device and the operating head are generally of two types.

According to a first type, each clamping vice is moved along the base by a respective motor. In this case, the machine is relatively expensive because of the presence of a motor for the feeding unit and a motor for each clamping vice and is relatively complex because of the need to interconnect and synchronize the three motors with each other so as to move the feeding unit and the two clamping vices with respective identical laws of motion.

According to the other of the two known types mentioned above, one clamping vice is motorised and the other clamping vice is a non-motorised clamping vice dragged along the base by the section bar which, once tightened in the two clamping vices, makes said clamping vices integral with each other. In this case, the lubricating oil deposited on the section bar during the processing by the cutting device and the operating head can cause slippage of the section bar with respect to the non-motorised clamping vice and compromise the correct synchronization of the two clamping vices.

The object of the present invention is to provide a machine for processing section bars, which is free from the drawbacks described above and simple and economical to implement.

According to the present invention, a machine for processing section bars is provided as claimed in the appended claims.

The present invention will now be described with reference to the accompanying drawings, which illustrate a non-limiting embodiment thereof, in which:
Figure 1 is a schematic perspective view, with parts removed for clarity, of a preferred embodiment of the machine for processing section bars of the present invention;
Figure 2 is a schematic perspective view, with parts removed for clarity, of a first detail of the machine in Figure 1;
Figure 3 is a schematic side view, with parts enlarged and parts removed for clarity, of the detail in Figure 2;
Figure 4 is a schematic perspective view, with parts removed for clarity, of a second detail of the machine in Figure 1;
Figure 5 is a schematic side view, with parts removed for clarity, of the detail of Figure 4; and
Figure 6 is a schematic side view, with parts removed for clarity, of a variant of the detail of Figures 4 and 5.

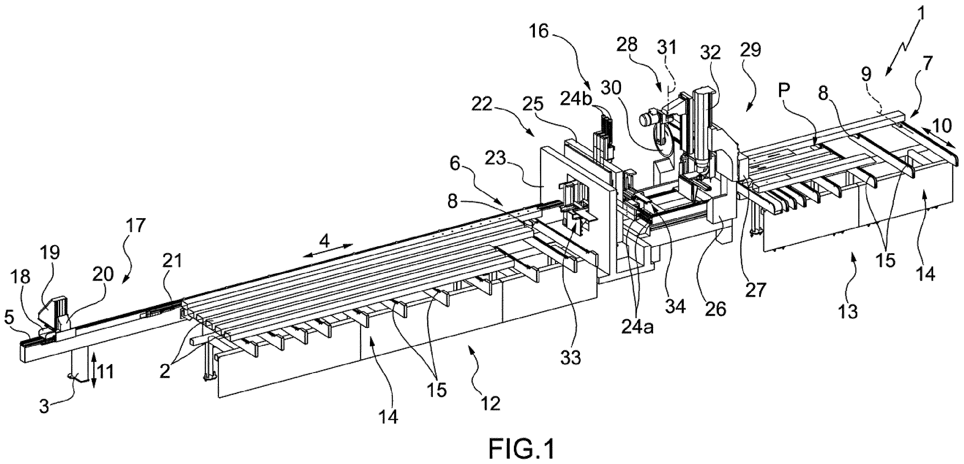

With reference to Figure 1, number 1 indicates, as a whole, a machine for processing section bars 2, in particular made of aluminium, light alloys, PVC or the like, having an elongated shape.

The machine 1 comprises an elongated base 3, which extends in a horizontal direction 4, and is provided with a longitudinal guide side-member 5 parallel to said direction 4.

The machine 1 also comprises two roller support devices 6, 7 mounted in succession along the base 3. Each device 6, 7 has a plurality of rollers 8, which are mounted to rotate about respective rotation axes 9 substantially parallel to each other and to a horizontal direction 10 transverse to direction 4, and define a support plane P for at least one bar 2.

Each roller 8 is movable in a vertical direction 11 orthogonal to directions 4 and 10 between a raised operative position and a lowered rest position.

The machine 1 is also provided with a loading station 12 for loading the bars 2 to be processed onto the device 6, and an unloading station 13 for unloading the bars 2 just processed from the device 7.

Each station 12, 13 comprises a belt conveyor 14, which faces the respective device 6, 7 in direction 10, and comprises, in turn, a plurality of conveyor belts 15, which are parallel to each other and to said direction 10.

The machine 1 further comprises a processing station 16, which is formed along the base 3 between the stations 12, 13, and extends between the devices 6, 7.

The section bars 2 are fed along the plane P and through the station 16 in direction 4 by a feeding device 17 comprising a first horizontal slide 18 coupled to the side-member 5 in a sliding manner so as to perform, with respect to the base 3, straight movements along the side-member 5 in direction 4; a second horizontal slide 19 coupled to the horizontal slide 18 in a sliding manner so as to perform, with respect to the horizontal slide 18, straight movements in direction 10; and a vertical slide 20 coupled to the horizontal slide 19 in a sliding manner so as to perform, with respect to the horizontal slide 19, straight movements in direction 11.

The vertical slide 20 has an elongated shape, extends in direction 4, and supports a holding member 21 connected to a free end of said vertical slide 20.

The member 21 is rotatably coupled to the vertical slide 20 so as to rotate, with respect to the vertical slide 20, about a rotation axis (not shown) parallel to direction 4, and comprises two jaws (not shown) that are movable between a clamping position and a release position of the section bars 2.

The station 16 is provided with a milling assembly 22 comprising an annular frame 23, which is mounted between the stations 12, 13, and extends around a path A along which the section bars 2 are fed; and a plurality of tool-holding spindles 24, which are mounted parallel to directions 10 and 11, and are each adapted to receive and hold a respective milling tool U of the known type.

The spindles 24 are mounted on the frame 23 via the interposition of a cross slide 25, which has an annular shape, extends around the path A, and is shaped so as to allow the spindles 24 to move, with respect to the base 3, in directions 10 and 11.

The spindles 24 parallel to direction 10 (hereinafter referred to as 24a) are coupled to the cross slide 25 so as to move, with respect to the cross slide 25, independently from one another in direction 10; and the spindles 24 parallel to direction 11 (hereinafter referred to as 24b) are coupled to the cross slide 25 so as to move, with respect to the cross slide 25, independently from one another in direction 11.

The station 16 is also provided with an overhead crane 26, which is mounted between the milling assembly 22 and the station 13, and is movable, with respect to the base 3, between the devices 6, 7 and the stations 12, 13 in direction 4.

The overhead crane 26 comprises a horizontal crossbar 27, which extends above the plane P in direction 10, supports a cutting device 28 for cutting each section bar 2 into two pieces (not shown), and further supports a drilling and/or milling device 29 for drilling into the adjacent ends of said pieces (not shown).

The device 28 is provided with a circular cutting blade 30, which is mounted to rotate about its own longitudinal axis, and is movable, with respect to the crossbar 27, in directions 10 and 11 and about a rotation axis 31 parallel to direction 11.

The device 29 is provided with a drilling and/or milling head 32 that is movable, with respect to the crossbar 27, in directions 10 and 11.

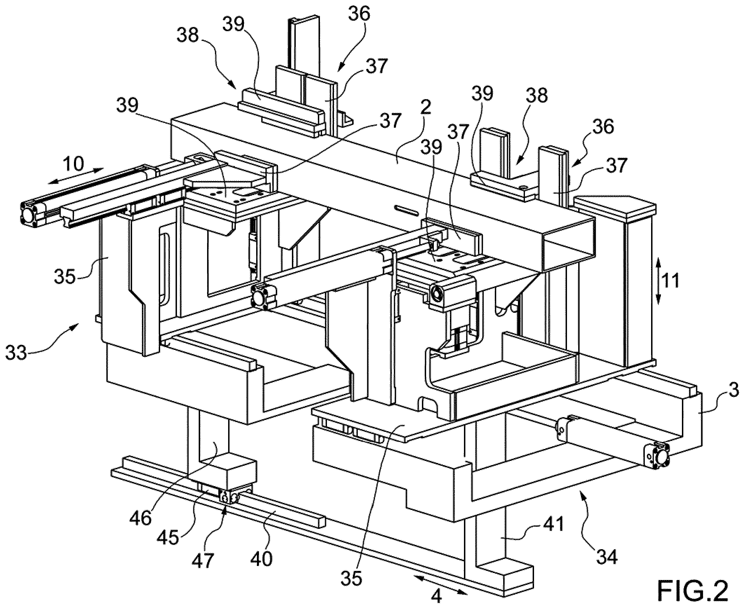

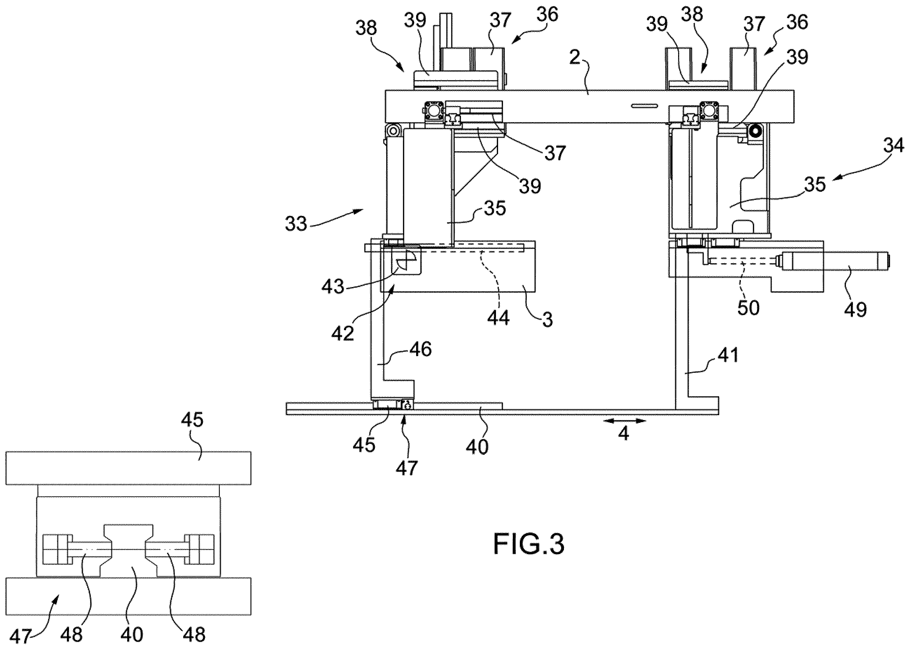

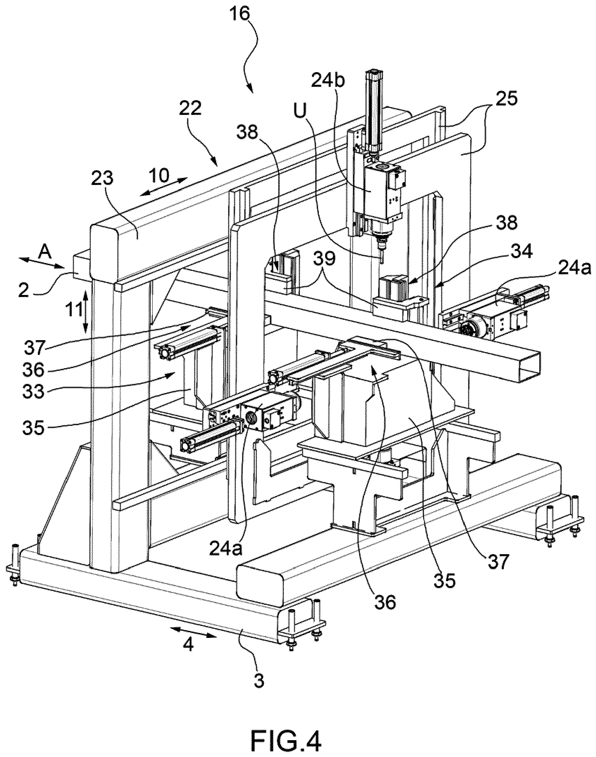

As illustrated in Figures 2, 3, 4, 5, and 6, the station 16 is provided, in this case, with two holding devices 33, 34 that are movable along the base 3 in direction 4.

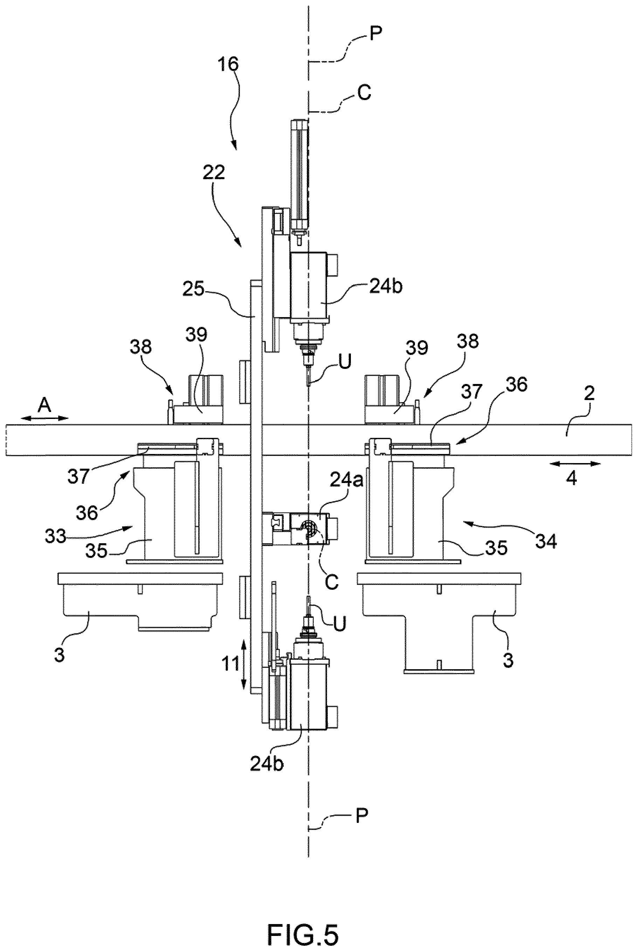

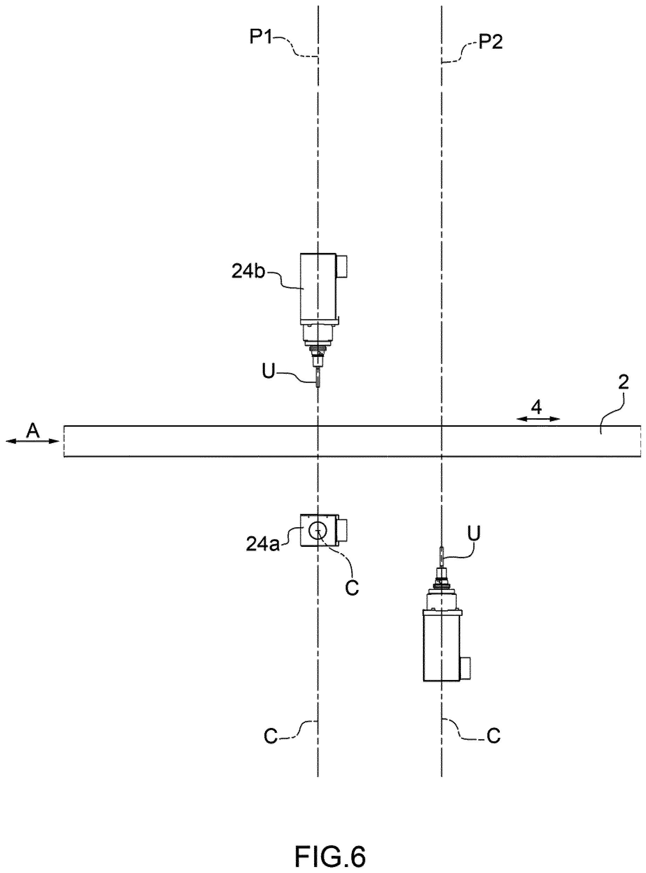

The two devices 33, 34 are arranged on opposite sides of the spindles 24a, 24b in direction 4, both when the tools U have respective rotation axes C coplanar with a single vertical containment plane P perpendicular to direction 4 (Figure 5), and when the axes C are arranged in and/or between two parallel containment planes P1, P2 separate from one another and perpendicular to said direction 4 (Figure 6).

The device 34 is mounted between the spindles 24a, 24b and the overhead crane 26.

Each device 33, 34 comprises a slide 35, which is coupled to the base 3 in a sliding manner so as to perform, with respect to the base 3, straight movements in direction 4, and supports a horizontal clamping vice 36 comprising two jaws 37 perpendicular to direction 10 and movable with respect to each other in said direction 10 between a clamping position and a release position of at least one section bar 2.

Each slide 35 also supports a vertical clamping vice 38 comprising two jaws 39 perpendicular to direction 11 and movable with respect to each other in said direction 11 between a clamping position and a release position of at least one section bar 2.

The device 34 is a non-motorised device, and is provided with a guide track 40, which extends between the devices 33, 34 parallel to direction 4, and is fixed to a free end of a vertical upright 41 projecting downwards from the respective slide 35 in direction 11.

The track 40 extends through the frame 23 and the cross slide 25 or below the frame 23 and the cross slide 25.

The device 33 is motorised and is moved along the base 3 in direction 4 by an operating device 42 comprising an electric motor 43, which is mounted on the respective slide 35, and has an output shaft provided with a gear (not shown) coupled to a rack 44 fixed along the base 3 parallel to said direction 4.

The device 33 is also provided with a shoe 45, which is formed on the free end of a vertical upright 46 projecting downwards from the respective slide 35 in direction 11, and is coupled to the track 40 in a sliding manner.

The shoe 45 houses, on the inside, a device 47 for locking the device 33 along the track 40.

The device 47 comprises two clamping jaws 48, which are arranged on the opposite side of the track 40 in direction 10, and are movable between a clamping position and a release position of said track 40.

When the jaws 48 are moved into the clamping position, the devices 33, 34 are integral with each other and are fed along the base 3 in direction 4 solely under the thrust of the operating device 42.

When the jaws 48 are moved into the release position, the device 33 can be fed by the device 42 along the base 3 in direction 4, while the device 34 remains stationary or is moved in the direction of the station 12 by a defined pushing device, in this case by an actuator cylinder 49 fixed to the base 3 parallel to direction 4 and provided with an output shaft 50 oriented towards the station 12 and adapted to contact the slide 35 of the said device 34.

## Claims

1. A machine for processing section bars (2), in particular made of aluminium, light alloys, PVC or the like, comprising an elongated base (3) extending in a first direction (4); at least one processing station (16); and a feeding unit (17, 33, 34) to feed the section bars (2) through the processing station (16) in the first direction (4); the processing station (16) being provided with a milling assembly (22) comprising, in turn, a support frame (23, 25) extending around a path (A) along which the section bars (2) are fed, and a plurality of tool-holding spindles (24), which are mounted on the support frame (23) parallel to a second and/or a third direction (10, 11) orthogonal to one another and to the first direction (4), and are provided with respective tools (U) for processing at least one section bar (2); the feeding unit (17, 33, 34) comprising a first holding and transporting device (33), an operating device (42) to move the first holding and transporting device (33) along the base (3) in the first direction (4), and a second holding and transporting device (34), which is aligned with the first holding and transporting device (33) along the first direction (4), and is movable along the base (3) in said first direction (4); said first and second transporting devices (33, 34) being arranged on opposite sides of the tool-holding spindles (24) in the first direction (4); said machine further comprising a locking device (47) to lock the second holding and transporting device (34) on the first holding and transporting device (33) and feed both holding and transporting devices (33, 34) along the base (3) in the first direction (4) under the thrust of said operating device (42).

2. The machine according to claim 1, wherein the locking device (47) is movable between a locking position, in which it locks the second holding and transporting device (34) on the first holding and transporting device (33), and a release position.

3. The machine according to claim 1 or 2, wherein said first and second holding and transporting devices (33, 34) are coupled to the base (3) in a sliding manner.

4. The machine according to any one of the preceding claims, wherein the first holding and transporting device (33) is coupled, in a sliding manner, to a guide track (40), which is integral with the second holding and transporting device (34).

5. The machine according to claim 4, wherein the locking device (47) is movable between a locking position, in which it locks the first holding and transporting device (33) on the guide track (40), and a release position.

6. The machine according to any one of the preceding claims, wherein each one of said first and second holding and transporting devices (33, 34) comprises at least one clamping vice (36, 38) provided with two jaws (37, 39), which are movable between a clamping position and a release position of the section bar (2).

7. The machine according to any one of the preceding claims, wherein said first and second holding and transporting devices (33, 34) are mounted in the area of the processing station (16).

8. The machine according to any one of the preceding claims, wherein the feeding unit (17, 33, 34) comprises, furthermore, a third holding and transporting device (17), which is designed to hold the section bar (2) at one rear end thereof.

9. The machine according to any one of the preceding claims and comprising, furthermore, a loading station (12) to load the section bars (2) to be processed and an unloading station (13) to unload the section bars (2) that have just been processed; the processing station (16) being arranged between the loading station (12) and the unloading station (13).

10. The machine according to claim 9 and comprising, furthermore, a pushing device (49) to move the second holding and transporting device (34) along the base (3) towards the loading station (12), when the locking device (47) is in its release position.

11. The machine according to any one of the preceding claims, wherein the processing station (16) is also provided with a cutting device (28) for cutting each section bar (2) into two pieces.

12. The machine according to any one of the preceding claims, wherein the support frame (23, 25) is annular.

## Patentansprüche

1. Maschine zur Verarbeitung von Profilstäben (2), insbesondere aus Aluminium, Leichtlegierungen, PVC oder ähnlichem, umfassend eine längliche Basis (3), sich erstreckend in eine erste Richtung (4); mindestens eine Verarbeitungsstation (16); und eine Zuführeinheit (17, 33, 34), um die Profilstäbe (2) durch die Verarbeitungsstation (16) in die erste Richtung (4) einzuspeisen;
wobei der Verarbeitungsstation (16) eine Fräsanordnung (22) bereitgestellt ist, umfassend, wiederum, einen Stützrahmen (23, 25), sich erstreckend um einen Pfad (A) herum, entlang welchem die Profilstäbe (2) eingespeist werden, und eine Mehrzahl von Werkzeughaltespindeln (24), welche auf dem Stützrahmen (23) parallel zu einer zweiten und/oder dritten Richtung (10, 11) orthogonal zueinander und zu der ersten Richtung (4) montiert sind, und mit jeweiligen Werkzeugen (U) zur Verarbeitung von mindestens einem Profilstab (2) bereitgestellt sind; wobei die Zuführeinheit (17, 33, 34) eine erste Halte- und Transportvorrichtung (33) umfasst, eine Bedienvorrichtung (42), um die erste Halte- und Transportvorrichtung (33) entlang der Basis (3) in die erste Richtung (4) zu bewegen, und eine zweite Halte- und Transportvorrichtung (34), welche an der ersten Halte- und Transportvorrichtung (33) entlang der ersten Richtung (4) ausgerichtet ist, und entlang der Basis (3) in die erste Richtung (4) bewegbar ist; wobei die ersten und zweiten Transportvorrichtungen (33, 34) auf gegenüberliegenden Seiten der Werkzeughaltespindeln (24) in der ersten Richtung (4) angeordnet sind; wobei die Maschine ferner eine Einrastvorrichtung (47) umfasst, um die zweite Halte- und Transportvorrichtung (34) auf der ersten Halte- und Transportvorrichtung (33) einzurasten, und beide Halte- und Transportvorrichtungen (33, 34) entlang der Basis (3) in der ersten Richtung (4) durch den Schub der Bedienvorrichtung (42) zu speisen.

2. Maschine gemäß Anspruch 1, wobei die Einrastvorrichtung (47) bewegbar ist zwischen einer Einrastposition, in welcher sie die zweite Halte- und Transportvorrichtung (34) auf der ersten Halte- und Transportvorrichtung (33) einrastet, und einer Freigabeposition.

3. Maschine gemäß Anspruch 1 oder 2, wobei die ersten und zweiten Halte- und Transportvorrichtungen (33, 34) mit der Basis (3) auf eine gleitende Weise gekoppelt sind.

4. Maschine gemäß einem der vorangegangenen Ansprüche, wobei die erste Halte- und Transportvorrichtung (33) gekoppelt ist, auf eine gleitende Weise, mit einer Führungsschiene (40), welche integral mit der zweiten Halte- und Transportvorrichtung (34) ist.

5. Maschine gemäß Anspruch 4, wobei die Einrastvorrichtung (47) bewegbar ist zwischen einer Einrastposition, in welcher sie die erste Halte- und Transportvorrichtung (33) auf der Führungsschiene (40) einrastet, und einer Freigabeposition.

6. Maschine gemäß einem der vorangegangenen Ansprüche, wobei jede eine der ersten und zweiten Halte- und Transportvorrichtungen (33, 34) mindestens einen Klemmschraubstock (36, 38) umfasst, bereitgestellt mit zwei Backen (37, 39), welche zwischen einer Klemmposition und einer Freigabeposition des Profilstabs (2) bewegbar sind.

7. Maschine gemäß einem der vorangegangenen Ansprüche, wobei die ersten und zweiten Halte- und Transportvorrichtungen (33, 34) in dem Bereich der Verarbeitungsstation (16) montiert sind.

8. Maschine gemäß einem der vorangegangenen Ansprüche, wobei die Zuführeinheit (17, 33, 34) ferner eine dritte Halte- und Transportvorrichtung (17) umfasst, welche ausgestaltet ist, um den Profilstab (2) an einem rückwärtigen Ende davon halten.

9. Maschine gemäß einem der vorangegangenen Ansprüche und ferner umfassend eine Aufladestation (12), um die zu verarbeitenden Profilstäbe (2) aufzuladen und eine Abladestation (13), um die Profilstäbe (2) abzuladen, die gerade erst verarbeitet wurden; wobei die Verarbeitungsstation (16) zwischen der Ladestation (12) und der Abladestation (13) angeordnet ist.

10. Maschine gemäß Anspruch 9 und ferner umfassend eine Schiebevorrichtung (49), um die zweite Halte- und Transportvorrichtung (34) entlang der Basis (3) in Richtung der Aufladestation (12) zu bewegen, wenn sich die Einrastvorrichtung (47) in ihrer Freigabestellung befindet.

11. Maschine gemäß einem der vorangegangenen Ansprüche, wobei der Verarbeitungsstation (16) auch eine Schneidevorrichtung (28) zum Schneiden jedes Profilstabs (2) in zwei Stücke bereitgestellt ist.

12. Maschine gemäß einem der vorangegangenen Ansprüche, wobei der Stützrahmen (23, 25) ringförmig ist.

## Revendications

1. Machine pour traiter des barres de profilé (2), en particulier en aluminium, alliages légers, PVC ou similaire, comprenant une base allongée (3) s'étendant dans une première direction (4) ; au moins un poste de traitement (16) ; et une unité d'amenée (17, 33, 34) pour amener les barres de profilé (2) à travers le poste de traitement (16) dans la première direction (4) ; le poste de traitement (16) étant pourvu d'un ensemble de fraisage (22) comprenant, quant à lui, un cadre de support (23, 25) s'étendant autour d'un trajet (A) le long duquel les barres de profilé (2) sont amenées, et une pluralité de broches porte-outils (24), qui sont montées sur le cadre de support (23) parallèles à une deuxième et/ou une troisième direction (10, 11) orthogonales l'une à l'autre et à la première direction (4), et sont pourvues d'outils (U) respectifs pour traiter au moins une barre de profilé (2) ; l'unité d'amenée (17, 33, 34) comprenant un premier dispositif de maintien et de transport (33), un dispositif de fonctionnement (42) pour déplacer le premier dispositif de maintien et de transport (33) le long de la base (3) dans la première direction (4), et un deuxième dispositif de maintien et de transport (34), qui est aligné sur le premier dispositif de maintien et de transport (33) le long de la première direction (4), et est mobile le long de la base (3) dans ladite première direction (4) ; lesdits premier et deuxième dispositifs de transport (33, 34) étant agencés sur des côtés opposés des broches porte-outils (24) dans la première direction (4); ladite machine comprenant en outre un dispositif de blocage (47) pour bloquer le deuxième dispositif de maintien et de transport (34) sur le premier dispositif de maintien et de transport (33) et amener les deux dispositifs de maintien et de transport (33, 34) le long de la base (3) dans la première direction (4) sous la poussée dudit dispositif de fonctionnement (42).

2. Machine selon la revendication 1, dans laquelle le dispositif de blocage (47) est mobile entre une position de blocage, dans laquelle il bloque le deuxième dispositif de maintien et de transport (34) sur le premier dispositif de maintien et de transport (33), et une position de libération.

3. Machine selon la revendication 1 ou 2, dans laquelle lesdits premier et deuxième dispositifs de maintien et de transport (33, 34) sont accouplés à la base (3) de manière coulissante.

4. Machine selon l'une quelconque des revendications précédentes, dans laquelle le premier dispositif de maintien et de transport (33) est accouplé, de manière coulissante, à une gorge de guidage (40), qui est d'un seul tenant avec le deuxième dispositif de maintien et de transport (34).

5. Machine selon la revendication 4, dans laquelle le dispositif de blocage (47) est mobile entre une position de blocage, dans laquelle il bloque le premier dispositif de maintien et de transport (33) sur la gorge de guidage (40), et une position de libération.

6. Machine selon l'une quelconque des revendications précédentes, dans laquelle chacun desdits premier et deuxième dispositifs de maintien et de transport (33, 34) comprend au moins un étau de serrage (36, 38) pourvu de deux mâchoires (37, 39), qui sont mobiles entre une position de serrage et une position de libération de la barre de profilé (2).

7. Machine selon l'une quelconque des revendications précédentes, dans laquelle lesdits premier et deuxième dispositifs de maintien et de transport (33, 34) sont montés dans la zone du poste de traitement (16).

8. Machine selon l'une quelconque des revendications précédentes, dans laquelle l'unité d'amenée (17, 33, 34) comprend en outre un troisième dispositif de maintien et de transport (17), qui est conçu pour maintenir la barre de profilé (2) au niveau d'une extrémité arrière de celle-ci.

9. Machine selon l'une quelconque des revendications précédentes et comprenant en outre un poste de chargement (12) pour charger les barres de profilé (2) à traiter et un poste de déchargement (13) pour décharger les barres de profilé (2) qui viennent d'être traitées ; le poste de traitement (16) étant agencé entre le poste de chargement (12) et le poste de déchargement (13).

10. Machine selon la revendication 9 et comprenant en outre un dispositif de poussée (49) pour déplacer le deuxième dispositif de maintien et de transport (34) le long de la base (3) vers le poste de chargement (12), lorsque le dispositif de blocage (47) est dans sa position de libération.

11. Machine selon l'une quelconque des revendications précédentes, dans laquelle le poste de traitement (16) est également pourvu d'un dispositif de découpe (28) pour découper chaque barre de profilé (2) en deux morceaux.

12. Machine selon l'une quelconque des revendications précédentes, dans laquelle le cadre de support (23, 25) est annulaire.
